# EUROPÄISCHE PATENTSCHRIFT

(11) **EP 2 685 932 B1**
(45) Veröffentlichungstag und Bekanntmachung des Hinweises auf die Patenterteilung: **02.08.2017**
(21) Anmeldenummer: 12703429.6
(22) Anmeldetag: 07.02.2012
(51) Int. Cl.: A61C 17/22, A46B 9/04, A46D 1/00, A46B 9/02

(54) **BÜRSTENKOPF**
BRUSH HEAD
TÊTE DE BROSSE

(30) Priorität: 18.03.2011 CH 457112011
(43) Veröffentlichungstag der Anmeldung: 22.01.2014
(73) Patentinhaber: Curaden AG, 6010 Kriens (CH)
(72) Erfinder: BREITSCHMID, Ueli, 6045 Meggen (CH)
(74) Vertreter: Rüfenacht, Philipp Michael
(86) Internationale Anmeldenummer: PCT/CH2012/000033
(87) Internationale Veröffentlichungsnummer: WO 2012/126126

(56) Entgegenhaltungen:
- US-A- 6 021 538
- US-A1- 2002 138 926
- US-A1- 2004 060 136
- US-A1- 2005 060 822

## Beschreibung

### Technisches Gebiet

Die Erfindung betrifft einen Bürstenkopf umfassend eine Adapterplatte, an welcher eine Vielzahl Filamente angebracht ist und die Bürste bildet, sowie eine Zahnbürste umfassend den Bürstenkopf und ein Verfahren zur Herstellung des Bürstenkopfs.

### Stand der Technik

Es ist bekannt, dass effektive Biofilm-Kontrolle nur durch mechanische Massnahmen (Bürsten) zu bewerkstelligen ist. Schallzahnbürsten d. h. elektrisch bewegte Zahnbürsten mit Frequenzen über 30 Tausend Amplituden per Minute gibt es seit über 25 Jahren. Wissenschaftliche und empirische Erkenntnisse legen nahe, dass diese Art von Zahnbürsten und deren Borstenköpfe orale Biofilme (Plaque) dank hydrodynamischer Wirkung weiter reduzieren können.

Die Systeme reinigen dank der Beschleunigung von Flüssigkeit auch im Zahnfleisch-Saum und im Eingang zu Zahnzwischenräumen - dies unter anderem auch ohne direkten Borstenkontakt. Die Borsten der Schallzahnbürsten bestehen üblicherweise aus Nylon, sind zwischen 6 - 12 mm lang mit Filaments-Stärken von 0,15 - 0,22 mm. Die Oberflächengeometrie der bisherigen Schallzahnbürstenköpfe entsteht durch das Beschneiden der Filamente.

Die bekannten Bürstenköpfe haben den Nachteil, dass keine zufriedenstellende Reinigung von Zähnen erreicht werden kann. Bekannte Bürstenköpfe sind in den Dokumenten US2002/0138926 und US2005/0060822 beschrieben.

### Darstellung der Erfindung

Aufgabe der Erfindung ist es, einen dem eingangs genannten technischen Gebiet zugehörender Bürstenkopf zu schaffen, welcher besonderes effektiv zur Reinigung von Zähnen eingesetzt werden kann.

Die Lösung der Aufgabe ist durch die Merkmale des Anspruchs 1 definiert. Gemäss der Erfindung weisen die Filamente unterschiedliche Längen auf.

Diese Ausgestaltung des Bürstenkopfs ermöglicht eine effektive Reinigung von Vertiefungen, z. B. im Interdentalraum, unter einem Zahnersatz und speziell bei Implantat-Pfosten, sowohl durch die direktmechanische Einwirkung der langen Borsten (die Durchwirbeln der Plaque-Matrix) als auch die hydrodynamische "Kärcher"-Wirkung durch die beschleunigte Flüssigkeit. Die erfindungsgemässe Borsten-Konfiguration ist insbesondere für Schallzahnbürsten zur mechanisch-enzymatisch kombinierten Bekämpfung von oralen Biofilmen geeignet. Jeweils mehrere Filamente einer im Wesentlichen gleichen Länge bilden ein Büschel mit insbesondere rundem oder rechteckigem Querschnitt, wobei die Büschel unterschiedliche Längen aufweisen und zwischen den Büscheln ein Freiraum vorgesehen ist. Damit wird ein besonders einfach zu produzierender Bürstenkopf erreicht. Mit der Bezeichnung "im Wesentlichen gleicher Länge" wird nicht ausgeschlossen, dass der Büschel selbst ein Profil aufweisen kann, wobei beispielsweise die Filamentlängen von aussen hin zum Zentrum des Büschels zu- oder abnehmen können. Ein Büschel kann damit zum Beispiel ein kegelförmiges Profil aufweisen. Die Querschnitte der Büschel können auch andere Formen aufweisen, so zum Beispiel eine ovale, polygonale, insbesondere dreieckige, oder eine sonstige, unregelmässige Form.

In Varianten kann der Bürstenkopf auch aus genau einem Büschel bestehen, welcher damit im Wesentlichen eine der Adapterplatte entsprechende Querschnittsfläche aufweist. Bevorzugt sind längere Büschel an einem Randbereich der Adapterplatte und kürzere Büschel an einem zentralen Bereich der Adapterplatte angebracht. Diese Borstenkonfiguration ermöglicht eine verbesserte Reinigung von Vertiefungen, z. B. im Interdentalraum, insbesondere bei Zahnersatz oder bei Implantat-Pfosten. Insbesondere ist die Borstenkonfiguration vorteilhaft bei der Verwendung in einer Schall-Zahnbürste, da damit eine optimierte Kombination der direktmechanischen Einwirkung und der hydrodynamische "Kärcher"-Wirkung, welche durch beschleunigte Flüssigkeit hervorgerufen wird, erreicht wird. Die langen Borsten am Rande des Borstenfeldes ermöglichen eine Durchwirbelung der Plaque-Matrix wie auch ein Erzeugen der "Kärcher"-Wirkung. Die langen Borstenbüschel im Randbereich können eine Doppelfunktion übernehmen, nämlich zumal als Distanzhalter für die kürzeren Borsten im zentralen Bereich, welche die Aufgabe haben die hydrodynamische Beschleunigung der Mundflüssigkeit zu bewirken und gleichzeitig in die Vertiefungen des Interdentalraumes, der Fissurenoberfläche und zu Implantat-Pfosten vorzudringen, um die vorhandenen Biofilme anzugreifen.

In Varianten können die kürzeren Büschel auch im Randbereich und die längeren Büschel zentral angeordnet sein.

Vorzugsweise sind an einem Randbereich der Adapterplatte zusätzlich kürzere Büschel zwischen den längeren Büscheln angeordnet. Damit wird eine weitere Optimierung der Reinigungswirkung in der Verwendung erreicht, da mittels der kürzeren Büschel die "Kärcher"-Wirkung auch im Randbereich erzeugt werden kann. So kann eine homogenere Kombination zwischen der "Kärcher"-Wirkung und der mechanischen Einwirkung erreicht werden.

In Varianten können im Randbereich ausschliesslich längere Büschel vorgesehen sein. Bevorzugt weisen die kürzeren Büschel eine kleinere Querschnittsfläche auf als die längeren Büschel. Durch die Ausbildung einer grösseren Querschnittsfläche kann die Festigkeit der längeren Büschel erhöht werden.

In Varianten können alle Büschel dieselbe Querschnittsfläche aufweisen. In diesem Fall kann die Festigkeit der Büschel zum Beispiel mittels einer Variation der Filamentstärke angepasst werden. Der Bürstenkopf weist bezüglich einer Längsachse des Bürstenkopfs eines oder mehrere der folgenden Merkmale auf:
a) Büschel einer ersten Länge sind an zwei ersten gegenüberliegenden Enden der Adapterplatte angeordnet;
b) Büschel einer zweiten Länge sind an zwei zweiten gegenüberliegenden Enden der Adapterplatte angeordnet;
c) zwischen den ersten und den zweiten Enden sind jeweils zwei Büschel einer dritten Länge so angeordnet, dass sich eine im Wesentlichen kontinuierliche Umrahmung der Adapterplatte ergibt;
d) rechtwinklig zu den zweiten gegenüberliegenden Enden der Adapterplatte angeordnete Büschel einer dritten Länge schliessen sich jeweils den Büschel der ersten Enden innerhalb der Umrahmung an.

Versuche haben gezeigt, dass mittels einer Kombination von obigen Merkmalen a) bis d) eine besonders effiziente Zahnreinigung erreicht werden kann, insbesondere bei der Verwendung des Bürstenkopfs in einer Schallzahnbürste. Die Angabe der Büschel bezieht sich jeweils auf entweder genau einen oder mehrere Büschel, welche insbesondere auch in einer speziellen Formation, z. B. in einer Dreiecksanordnung oder dergleichen, vorliegen können. Dem Fachmann ist klar, dass die Umrahmung auch anderweitig ausgebildet sein kann. Vier Büschel, insbesondere Büschel einer dritten Länge mit rechteckigem Querschnitt, sind rhombusförmig und zentral auf der Adapterplatte angeordnet, wobei mindestens ein Büschel, insbesondere ein Büschel einer dritten Länge, runden Querschnitts eingeschlossen ist. Damit wird sowohl ein unverkennbares Design geschaffen, als auch die Impulsverteilung bei der Verwendung homogenisiert, wodurch eine optimierte Zahnreinigung ermöglicht wird.

In Varianten können die Büschel mit rechteckigem Querschnitt auch anderweitig angeordnet, insbesondere als Quadrat oder dergleichen, oder es kann gänzlich darauf verzichtet werden.

Vorzugsweise ist die erste Länge grösser als die zweite Länge und die zweite Länge grösser als die dritte Länge.

In Varianten können die drei Längen beliebig permutiert werden.

In einer bevorzugten Ausführungsform des Bürstenkopfs weist dieser bezüglich einer Längsachse des Bürstenkopfs eines oder mehrere der folgenden Merkmale auf:
a) drei Büschel einer ersten Länge sind in Dreiecksanordnung an zwei ersten gegenüberliegenden Enden der Adapterplatte angeordnet, wobei sich insbesondere jeweils eine Ecke der Dreiecksanordnungen gegenüberstehen;
b) drei Büschel einer zweiten Länge sind in einer Linienanordnung an zwei zweiten gegenüberliegenden Enden der Adapterplatte angeordnet;
c) zwischen den Dreiecksanordnungen und den Linienanordnungen sind jeweils zwei Büschel einer dritten Länge so angeordnet, dass sich eine im Wesentlichen kontinuierliche Umrahmung der Adapterplatte ergibt;
d) zwei rechtwinklig zu den zweiten gegenüberliegenden Enden der Adapterplatte angeordnete Büschel einer dritten Länge schliessen sich den beiden Dreiecksanordnungen innerhalb der Umrahmung an;
e) vier Büschel, insbesondere Büschel einer dritten Länge mit rechteckigem Querschnitt, sind rhombusförmig und zentral auf der Adapterplatte angeordnet, wobei mindestens ein Büschel, insbesondere ein Büschel einer dritten Länge, runden Querschnitts eingeschlossen ist;
f) wobei insbesondere die erste Länge grösser als die zweite Länge ist und die zweite Länge grösser als die dritte Länge ist.

Mittels dieser Anordnung wird die Reinigungswirkung weiter optimiert.

Bevorzugt sind die Filamente auf einer ovalen Adapterplatte angeordnet.

In Varianten kann die Adapterplatte auch andere Grundformen aufweisen, insbesondere rechteckig, eierförmig etc.

Bevorzugt weist die Adapterplatte mit den Filamenten mindestens eine longitudinal und/oder transversale Symmetrieachse auf.

In Varianten kann die Anordnung der Filamente auf der Adapterplatte auch unsymmetrisch erfolgen.

Vorzugsweise sind die Filamente aus Polyethylen oder aus einem Polyester, insbesondere aus Polybutylenterephtalat gebildet. Der Einsatz von Polyester für die Filamente hat den Vorteil, dass die Filamente feiner ausgebildet sein können als z. B. bei Nylon-Filamenten. Dies beruht darauf, dass Polyester eine höhere Festigkeit und eine weitgehend irrelevante Wasseraufnahme aufweist. Nylon büsst nämlich durch Wasseraufnahme von bis 9 % einen Teil seiner Festigkeit in nassem Zustand ein, womit Nylon-Bürsten Filamente mit 50 % grösserem Durchmesser benötigen. Polyethylen hat den Vorteil, dass es einfach zu verarbeiten und kostengünstig ist.

In Varianten können die Filamente auch aus anderen dem Fachmann bekannten Stoffen hergestellt sein, welche für Zahnbürsten geeignet sind.

Bevorzugt weisen die Filamente eine Stärke von 0.1 bis 0.15 mm, insbesondere etwa 0.127 mm auf. Als Stärke wird der Durchmesser der Filamente verstanden. Versuche haben gezeigt, dass damit ein guter Kompromiss zwischen Flexibilität, Stabilität und Festigkeit erreicht wird.

In Varianten können die Filamente auch andere Stärken aufweisen. Insbesondere wenn die Filamente nicht aus Polyester gebildet sind, kann eine grössere Dicke vorteilhaft sein.

Vorzugsweise ist die Adapterplatte aus einem Copolymer, umfassend Acrylonitril, Butadien und Styren gebildet. Dieses Copolymer wird im Handel mit Polylac ABS bezeichnet, wobei für eine Zahnbürste bevorzugt Batch ABS weiss eingesetzt wird.

In Varianten können auch andere Materialien für die Adapterplatte eingesetzt werden, dem Fachmann ist dazu eine Vielzahl geeigneter Materialien bekannt.

Vorzugsweise ist der obig beschriebene Bürstenkopf als Teil einer Zahnbürste ausgebildet. Besonders bevorzugt ist die Zahnbürste als Schallzahnbürste ausgebildet. Betrieben wird diese vorzugsweise zwischen 25'000 und 45'000 Amplituden pro Minute. Bevorzugt wird die Zahnbürsten, respektive Schallzahnbürste in der Verwendung in Kombination mit enzymhaltigen Mundpflegeprodukten eingesetzt, womit eine besonders effektive Zerstörung der Biofilm-Matrix ermöglicht wird. Die Kombination der chemischenzymatische Spülung mit der hydrodynamischen Reinigung ermöglicht eine besonders effiziente Reinigung der Zähne und der Mundhöhle. Mittels der hydrodynamischen Reinigung werden die Mirko-Organismen freigelegt und durch die enzymhaltigen Mundpflegeprodukte werden diese unschädlich gemacht. So kann die Matrix von Biofilmen und die darin angesiedelten Mikro-Organismen genügend effizient zerstört werden.

Ein enzymhaltiges Mundpflegeprodukt umfasst vorzugsweise Plaque-Matrix abbauende Enzyme, wie z. B. Glucanase, Amylase, Peroxidasen, Proteasen und weitere physiologische Enzyme. Das Mundpflegeprodukt kann unterschiedliche Enzyme in beliebigen Mischungen oder aber auch genau ein Enzym umfassen. Vorzugsweise handelt es sich bei dem Mundpflegeprodukt um ein Gel, eine Paste, ein Pulver oder um ein Liquid. Bevorzugt wird das Mundpflegeprodukt in Kombination mit dem obig beschriebenen Bürstenkopf respektive Zahnbürste eingesetzt.

In einem Verfahren zur Herstellung eines Bürstenkopfs werden auf einer Adapterplatte mehrere Büschel mit rundem und/oder rechteckigem Querschnitt zueinander beabstandet angeordnet, wobei die Büschel unterschiedliche Längen aufweisen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht einer Ausführungsform der erfindungsgemässen Zahnbürste mit dem Bürstenkopf;
- Fig. 2: eine schematische Draufsicht der Ausführungsform gemäss Figur 1 der erfindungsgemässen Zahnbürste mit einem vergrösserten Ausschnitt der Zahnbürste, umfassend den Bürstenkopf.

Grundsätzlich sind in den Figuren gleiche Teile mit gleichen Bezugszeichen versehen.

### Wege zur Ausführung der Erfindung

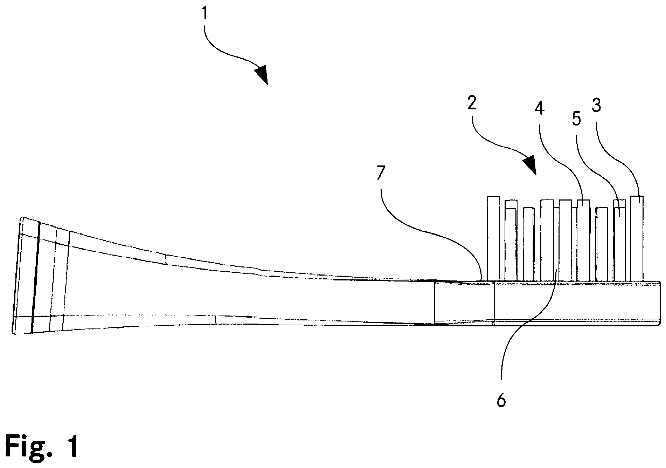

Die Figur 1 zeigt eine Seitenansicht einer Ausführungsform einer Zahnbürste 1 mit einem Bürstenkopf 2. Der Stiel der Zahnbürste 1 ist so ausgebildet, dass sie als Schallzahnbürste eingesetzt werden kann, d. h. der Stiel weist einen Kopplungsteil für einen Schwingungsgenerator auf. Der Bürstenkopf 2 umfasst eine Adapterplatte 7, auf welcher eine Vielzahl an Filamenten, gebündelt zu Büscheln 3 - 6, angeordnet ist, wobei die Büschel 3 - 6 unterschiedliche Längen aufweisen. Anhand der Figur 1 ist ersichtlich, dass die Büschel erster Länge 3 grösser als die Büschel zweiter Länge 4 sind und die Büschel zweiter Länge 4 grösser als die Büschel dritter Länge 5 sind.

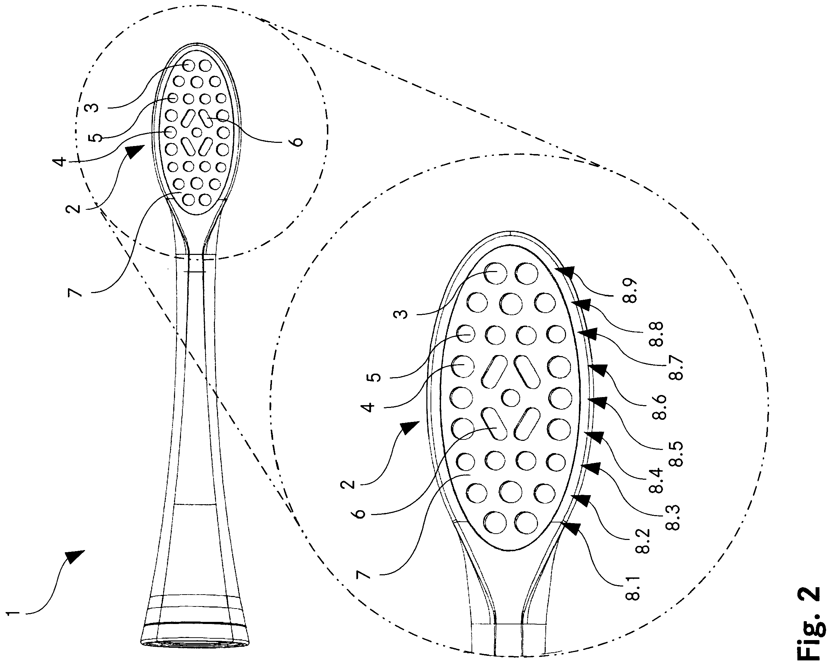

Die Figur 2 zeigt eine Draufsicht auf die Zahnbürste 1 gemäss Figur 1. Die Adapterplatte 7 ist oval ausgebildet und weist damit eine transversale und eine longitudinale Symmetrieachse auf. Die Länge der Adapterplatte 7 beträgt vorliegend 21.4 mm und die Breite beträgt 9.87 mm. Nachfolgend ist eine erste bevorzugte Ausführungsform eines Bürstenkopfs beschrieben.

Mit der Adapterplatte 7 sind vier verschiedene Filamentbüscheltypen verbunden, nämlich einen erster Länge 3, welcher 10.5 mm lang ist und einen kreisförmigen Querschnitt mit einem Durchmesser von 1.5 mm aufweist; einen zweiter Länge 4, welcher 10 mm lang ist und einen kreisförmigen Querschnitt mit einem Durchmesser von 1.35 mm aufweist; einen dritter Länge 5, welcher 9 mm lang ist und einen kreisförmigen Querschnitt mit einem Durchmesser von 1.2 mm aufweist; sowie einer dritter Länge 6, welcher auch 9 mm lang ist, aber einen arrondierten rechteckigen (pillenförmiger) Querschnitt aufweist, welcher 1 mm breit, 2.5 mm lang ist und einen Radius von 0.5 mm bei den Arrondierungen aufweist.

In einer zweiten bevorzugten Ausführungsform weist der Bürstenkopf eine Breite von 11.9 mm auf. Mit der Adapterplatte 7 sind wiederum, wie obig beschrieben, vier verschiedene Filamentbüscheltypen verbunden. Im Unterschied zur obigen Ausführungsform weist jedoch der Filamentbüscheltyp 4 eine Länge von 10 mm und einen kreisförmigen Querschnitt mit einem Durchmesser von 1.3 mm auf. Die Gesamtlänge der Bürste kann dabei 79.3 mm betragen.

Die Büschel sind im Wesentlichen in Form von quer zu einer Längsachse der Adapterplatte 7 ausgerichteten und zueinander beabstandeten Zeilen 8.1 - 8.9, nummeriert bezüglich der Figuren von links nach rechts, angeordnet, welche jeweils mehrere zueinander beabstandete Büschel umfassen und wobei die Zeilen bezüglich der Längsachse zentriert sind. Die Zeilen 8.1 - 8.9 weisen eine transversale Symmetrieachse auf, das heisst, die Zeile 8.1 entspricht der Zeile 8.9, die Zeile 8.2 entspricht der Zeile 8.8 etc. Damit ist einzig die Zeile 8.5 nur einmal vorhanden. Nachfolgend sind daher lediglich die Zeilen 8.1 - 8.5 beschrieben:
Die erste Zeile 8.1 umfasst zwei Büschel der ersten Länge 3.

Die zweite Zeile 8.2 umfasst zwei Büschel der dritten Länge 5 und einen Büschel dazwischen der ersten Länge 3.

Die dritte Zeile 8.3 umfasst vier Büschel der dritten Länge 5.

Die vierte Zeile 8.4 umfasst zwei Büschel der zweiten Länge 4 und dazwischen zwei rechteckige Büschel 6, welche V-förmig mit Öffnungsrichtung nach rechts und geringfügig bezüglich der Figur 2 nach rechts versetzt sind.

Die fünfte Zeile 8.5 umfasst zwei Büschel der zweiten Länge 4 und dazwischen einen Büschel der dritten Länge 5.

Die Filamente der Büschel 3 bis 6 sind aus Polybutylenterephtalat gebildet und weisen einen Durchmesser von 0.127 mm, oder, insbesondere bei der zweiten bevorzugten Ausführungsform, einen Durchmesser von 0.152 mm auf. In beiden obig beschriebenen Ausführungsformen können die Büschel Filamente unterschiedlicher Durchmesser aufweisen. Vorzugsweise beträgt der Filamentdurchmesser der Büschel 3 und 4 0.152 mm während der Filamentdurchmesser der Büschel 5 und 6 0.127 mm beträgt.

Die Adapterplatte ist aus einem Copolymer, umfassend Acrylonitril, Butadien und Styren gebildet.

Dem Fachmann ist klar, dass die Längenangaben variiert werden können. Z. B. können sämtliche Längen um 1 mm grösser oder kleiner sein, aber auch die Unterschiede der Längen der Büscheltypen, die Dimension der Adapterplatte 7, wie auch die Querschnittsflächen der Büschel können variiert werden ohne aus der Grundidee der Erfindung auszutreten.

Zusammenfassend ist festzustellen, dass mittels des besonderen Profils des vorliegenden Bürstenkopfs, welcher unterschiedlich lange Büschel aufweist, eine effiziente und effektive Reinigung von Zähnen erreicht werden kann. Der Bürstenkopf ist insbesondere geeignet im Einsatz als Schallzahnbürste und der Verwendung von enzymhaltigen Mundpflegeprodukten.

## Patentansprüche

1. Bürstenkopf (2), insbesondere für eine Zahnbürste (1), besonders bevorzugt für eine Schallzahnbürste (1), umfassend eine Adapterplatte (7) an welcher eine Vielzahl Filamente angebracht ist und die Bürste bildet, wobei die Filamente unterschiedliche Längen aufweisen, und wobei jeweils mehrere Filamente einer im Wesentlichen gleichen Länge ein Büschel (3,..., 6) mit insbesondere rundem oder rechteckigem Querschnitt bilden, wobei die Büschel (3,..., 6) unterschiedliche Längen aufweisen und zwischen den Büscheln (3,.., 6) ein Freiraum vorgesehen ist, **dadurch gekennzeichnet, dass**
a) Büschel einer ersten Länge (3) an zwei ersten gegenüberliegenden Enden der Adapterplatte (7) angeordnet sind;
b) Büschel einer zweiten Länge (4) an zwei zweiten gegenüberliegenden Enden der Adapterplatte (7) angeordnet sind;
c) zwischen den ersten und den zweiten Enden jeweils zwei Büschel einer dritten Länge (5) so angeordnet sind, dass sich eine im Wesentlichen kontinuierliche Umrahmung der Adapterplatte (7) ergibt;
d) vier Büschel (6), insbesondere Büschel einer dritten Länge mit rechteckigem Querschnitt, rhombusförmig und zentral auf der Adapterplatte (7) angeordnet sind, wobei mindestens ein Büschel (5), insbesondere ein Büschel einer dritten Länge, runden Querschnitts eingeschlossen ist.

2. Bürstenkopf (2) nach Anspruch 1, **dadurch gekennzeichnet, dass** längere Büschel (3, 4) an einem Randbereich der Adapterplatte (7) und kürzere Büschel (5, 6) an einem zentralen Bereich der Adapterplatte (7) angebracht sind.

3. Bürstenkopf (2) nach Anspruch 2, **dadurch gekennzeichnet, dass** an einem Randbereich der Adapterplatte (7) zusätzlich kürzere Büschel (5) zwischen den längeren Büscheln (3,4) angeordnet sind.

4. Bürstenkopf (2) nach Anspruch 3, **dadurch gekennzeichnet, dass** die kürzeren Büschel (5,6) eine kleinere Querschnittsfläche aufweisen als die längeren Büschel (3, 4).

5. Bürstenkopf (2) nach einem der Ansprüche 1 bis 4, **dadurch gekennzeichnet, dass** der Bürstenkopf (2) bezüglich einer Längsachse des Bürstenkopfs (2) das folgende Merkmal aufweist:
a) rechtwinklig zu den zweiten gegenüberliegenden Enden der Adapterplatte (7) angeordnete Büschel (4) einer dritten Länge (5) schliessen sich jeweils den Büschel der ersten Enden innerhalb der Umrahmung an.

6. Bürstenkopf (2) nach Anspruch 5, **dadurch gekennzeichnet, dass** die erste Länge grösser als die zweite Länge ist und die zweite Länge grösser als die dritte Länge ist.

7. Bürstenkopf (2) nach einem der Ansprüche 1 bis 6, **dadurch gekennzeichnet, dass** die Filamente auf einer ovalen Adapterplatte (7) angeordnet sind.

8. Bürstenkopf (2) nach einem der Ansprüche 1 bis 7, **dadurch gekennzeichnet, dass** die Adapterplatte (7) mit den Filamenten mindestens eine longitudinale und/oder transversale Symmetrieachse aufweist.

9. Bürstenkopf (2) nach einem der Ansprüche 1 bis 8, **dadurch gekennzeichnet, dass** die Filamente aus Polyethylen oder aus einem Polyester, insbesondere aus Polybutylenterephtalat gebildet sind.

10. Bürstenkopf (2) nach einem der Ansprüche 1 bis 9, **dadurch gekennzeichnet, dass** die Filamente eine Stärke von 0.1 bis 0.15 mm, insbesondere etwa 0.127 mm aufweisen.

11. Bürstenkopf (2) nach einem der Ansprüche 1 bis 10, **dadurch gekennzeichnet, dass** die Adapterplatte aus einem Copolymer, umfassend Acrylonitril, Butadien und Styren gebildet ist.

12. Zahnbürste (1) umfassend einen Bürstenkopf (2) nach einem der vorangehenden Ansprüchen.

13. Zahnbürste (1) nach Anspruch 12, **dadurch gekennzeichnet, dass** sie als Schallzahnbürste (1) ausgebildet ist.

14. Verfahren zur Herstellung eines Bürstenkopfs (2) nach einem der Ansprüche 1 bis 11, **dadurch gekennzeichnet, dass** auf einer Adapterplatte (7) mehrere Büschel (3,..., 6) mit rundem und/oder rechteckigem Querschnitt zueinander beabstandet angeordnet werden, wobei die Büschel (3,..., 6) unterschiedliche Längen aufweisen wobei jeweils mehrere Filamente einer im Wesentlichen gleichen Länge ein Büschel (3,..., 6) mit insbesondere rundem oder rechteckigem Querschnitt bilden, wobei die Büschel (3,..., 6) unterschiedliche Längen aufweisen und zwischen den Büscheln (3,..., 6) ein Freiraum vorgesehen ist, **dadurch gekennzeichnet, dass**
a) Büschel einer ersten Länge (3) an zwei ersten gegenüberliegenden Enden der Adapterplatte (7) angeordnet sind;
b) Büschel einer zweiten Länge (4) an zwei zweiten gegenüberliegenden Enden der Adapterplatte (7) angeordnet sind;
c) zwischen den ersten und den zweiten Enden jeweils zwei Büschel einer dritten Länge (5) so angeordnet sind, dass sich eine im Wesentlichen kontinuierliche Umrahmung der Adapterplatte (7) ergibt;
d) vier Büschel (6), insbesondere Büschel einer dritten Länge mit rechteckigem Querschnitt, rhombusförmig und zentral auf der Adapterplatte (7) angeordnet sind, wobei mindestens ein Büschel (5), insbesondere ein Büschel einer dritten Länge, runden Querschnitts eingeschlossen ist,

## Claims

1. A brush head (2), particularly for a toothbrush (1), more preferably for a sonic toothbrush (1), including an adapter plate (7) to which a multitude of filaments is attached and which forms the brush, wherein the filaments have different lengths and wherein multiple filaments of substantially the same length form a tuft (3,..., 6) having particularly a round or rectangular cross section, wherein said tufts (3,..., 6) have different lengths and a free space is provided between said tufts (3,..., 6), **characterized in that**
a) tufts of a first length (3) are disposed on two first opposite ends of the adapter plate (7);
b) tufts of a second length (4) are disposed on two second opposite ends of the adapter plate (7);
c) two tufts of a third length (5) are each arranged between the first and second ends such that a substantially continuous framing of the adapter plate (7) is formed;
d) four tufts (6), particularly tufts of a third length having a rectangular cross section, are arranged in a rhomboid form and centrally on the adapter plate (7), wherein at least one tuft (5), particularly a tuft of a third length, having a round cross section is enclosed.

2. The brush head (2) according to claim 1, **characterized in that** longer tufts (3, 4) are attached to an edge region of the adapter plate (7) and shorter tufts (5, 6) are attached to a central region of the adapter plate (7).

3. The brush head (2) according to claim 2, **characterized in that** additional shorter tufts (5) are arranged between the longer tufts (3, 4) in an edge region of the adapter plate (7).

4. The brush head (2) according to claim 3, **characterized in that** the shorter tufts (5, 6) have a smaller cross-sectional area than the longer tufts (3, 4).

5. The brush head (2) according to any one of claims 1 to 4, **characterized in that** the brush head (2) has the following feature with respect to a longitudinal axis of the brush head (2):
a) tufts (4) of a third length (5) arranged at a right angle to the second opposite ends of the adapter plate (7) follow each of the tufts of the first ends within the framing.

6. The brush head (2) according to claim 5, **characterized in that** the first length is greater than the second length and the second length is greater than the third length.

7. The brush head (2) according to any one of claims 1 to 6, **characterized in that** the filaments are arranged on an oval adapter plate (7).

8. The brush head (2) according to any one of claims 1 to 7, **characterized in that** the adapter plate (7) with the filaments has at least one longitudinal and/or transversal symmetry axis.

9. The brush head (2) according to any one of claims 1 to 8, **characterized in that** the filaments are made of polyethylene or of a polyester, particularly of polybutylene terephthalate.

10. The brush head (2) according to any one of claims 1 to 9, **characterized in that** the filaments have a thickness in the range from 0.1 to 0.15 mm, particularly about 0.127 mm.

11. The brush head (2) according to any one of claims 1 to 10, **characterized in that** the adapter plate is made of a copolymer including acrylonitrile, butadiene, and styrene.

12. A toothbrush (1) including a brush head (2) according to any one of the preceding claims.

13. The toothbrush (1) according to claim 12, **characterized in that** it is designed as a sonic toothbrush (1).

14. A method for producing a brush head (2) according to any one of claims 1 to 11, **characterized in that** multiple tufts (3,..., 6) with round and/or rectangular cross sections are arranged at a spacing to one another on an adapter plate (7), wherein the tufts (3,..., 6) have different lengths and wherein multiple filaments of substantially the same length form a tuft (3,..., 6) having particularly a round or rectangular cross section, wherein said tufts (3,..., 6) have different lengths and a free space is provided between said tufts (3,..., 6), **characterized in that**
a) tufts of a first length (3) are disposed on two first opposite ends of the adapter plate (7);
b) tufts of a second length (4) are disposed on two second opposite ends of the adapter plate (7);
c) two tufts of a third length (5) are each arranged between the first and second ends such that a substantially continuous framing of the adapter plate (7) is formed;
d) four tufts (6), particularly tufts of a third length having a rectangular cross section, are arranged in a rhomboid form and centrally on the adapter plate (7), wherein at least one tuft (5), particularly a tuft of a third length, having a round cross section is enclosed.

## Revendications

1. Tête de brosse (2), en particulier pour une brosse à dents (1), de manière particulièrement préférée pour une brosse à dents sonique (1), comprenant une plaque d'adaptation (7), sur laquelle une pluralité de filaments est montée et forme la brosse, dans laquelle les filaments présentent différentes longueurs, et dans laquelle respectivement plusieurs filaments d'une longueur sensiblement identique forment une touffe (3, ..., 6) avec une section en particulier ronde ou rectangulaire, dans laquelle les touffes (3, ..., 6) présentent différentes longueurs et entre les touffes (3, ..., 6) est prévu un espace libre, **caractérisée en ce que**
a) des touffes d'une première longueur (3) sont agencées sur deux premières extrémités en regard de la plaque d'adaptation (7) ;
b) des touffes d'une deuxième longueur (4) sont agencées sur deux secondes extrémités en regard de la plaque d'adaptation (7) ;
c) entre les premières et les secondes extrémités, respectivement deux touffes d'une troisième longueur (5) sont agencées de sorte qu'un encadrement sensiblement continu de la plaque d'adaptation (7) se produise ;
d) quatre touffes (6), en particulier des touffes d'une troisième longueur avec une section transversale rectangulaire sont agencées en forme de losange et centralement sur la plaque d'adaptation (7), dans lequel au moins une touffe (5), en particulier une touffe d'une troisième longueur de section transversale ronde est incluse.

2. Tête de brosse (2) selon la revendication 1, **caractérisée en ce que** de plus longues touffes (3, 4) sont montées sur une zone de bord de la plaque d'adaptation (7) et de plus courtes touffes (5, 6) sont montées sur une zone centrale de la plaque d'adaptation (7).

3. Tête de brosse (2) selon la revendication 2, **caractérisée en ce que** sur une zone de bord de la plaque d'adaptation (7), en outre des touffes plus courtes (5) sont agencées entre les plus longues touffes (3, 4).

4. Tête de brosse (2) selon la revendication 3, **caractérisée en ce que** les plus courtes touffes (5, 6) présentent une plus petite surface de section transversale que les plus longues touffes (3, 4).

5. Tête de brosse (2) selon l'une des revendications 1 à 4, **caractérisée en ce que** la tête de brosse (2) présente par rapport à un axe longitudinal de la tête de brosse (2) la caractéristique suivante :
a) des touffes (4) agencées à angle droit par rapport aux secondes extrémités en regard de la plaque d'adaptation (7) d'une troisième longueur (5) sont contiguës respectivement aux touffes des premières extrémités dans l'encadrement.

6. Tête de brosse (2) selon la revendication 5, **caractérisée en ce que** la première longueur est supérieure à la deuxième longueur et la deuxième longueur est supérieure à la troisième longueur.

7. Tête de brosse (2) selon l'une des revendications 1 à 6, **caractérisée en ce que** les filaments sont agencés sur une plaque d'adaptation ovale (7).

8. Tête de brosse (2) selon l'une des revendications 1 à 7, **caractérisée en ce que** la plaque d'adaptation (7) présente avec les filaments au moins un axe de symétrie longitudinal et/ou transversal.

9. Tête de brosse (2) selon l'une des revendications 1 à 8, **caractérisée en ce que** les filaments sont constitués de polyéthylène ou d'un polyester, en particulier de polybutylènetéréphtalate.

10. Tête de brosse (2) selon l'une des revendications 1 à 9, **caractérisée en ce que** les filaments présentent une épaisseur de 0,1 à 0,15 mm, en particulier d'environ 0,127 mm.

11. Tête de brosse (2) selon l'une des revendications 1 à 10, **caractérisée en ce que** la plaque d'adaptation est formée d'un copolymère, comprenant de l'acrylonitrile, du butadiène et du styrène.

12. Brosse à dent (1) comprenant une tête de brosse (2) selon l'une des revendications précédentes.

13. Brosse à dent (1) selon la revendication 12, **caractérisée en ce qu'**elle est réalisée comme brosse à dents sonique (1).

14. Procédé de fabrication d'une tête de brosse (2) selon l'une des revendications 1 à 11, **caractérisé en ce que** sur une plaque d'adaptation (7), plusieurs touffes (3, ..., 6) avec une section transversale ronde et/ou rectangulaire sont agencées à distance les unes des autres, dans lequel les touffes (3, ..., 6) présentent différentes longueurs, dans lequel respectivement plusieurs filaments d'une longueur sensiblement identique forment une touffe (3, ..., 6) avec une section transversale en particulier ronde ou rectangulaire, dans lequel les touffes (3, ..., 6) présentent différentes longueurs et entre les touffes (3, ..., 6) est prévu un espace libre, **caractérisé en ce que**
a) des touffes d'une première longueur (3) sont agencées sur deux premières extrémités en regard de la plaque d'adaptation (7) ;
b) des touffes d'une deuxième longueur (4) sont agencées sur deux secondes extrémités en regard de la plaque d'adaptation (7) ;
c) entre les premières et les secondes extrémités, respectivement deux touffes d'une troisième longueur (5) sont agencées de sorte qu'un encadrement sensiblement continu de la plaque d'adaptation (7) se produise ;
d) quatre touffes (6), en particulier des touffes d'une troisième longueur avec une section transversale rectangulaire sont agencées en forme de losange et centralement sur la plaque d'adaptation (7), dans lequel au moins une touffe (5), en particulier une touffe d'une troisième longueur de section transversale ronde est incluse.
